# EUROPÄISCHE PATENTSCHRIFT

(11) **EP 4 217 871 B1**
(45) Veröffentlichungstag und Bekanntmachung des Hinweises auf die Patenterteilung: **18.02.2026**
(21) Anmeldenummer: 21815407.8
(22) Anmeldetag: 15.11.2021
(51) Int. Cl.: G06F 11/263

(54) **VERFAHREN UND SYSTEME ZUM VALIDIEREN VON INDUSTRIELLEN MASCHINENSYSTEMEN**
METHOD AND SYSTEMS FOR VALIDATION OF INDUSTRIAL MACHINE SYSTEMS
PROCÉDÉ ET SYSTÈMES POUR VALIDER DES SYSTÈMES DE MACHINES INDUSTRIELS

(30) Priorität: 23.11.2020 EP 20209192
(43) Veröffentlichungstag der Anmeldung: 02.08.2023
(73) Patentinhaber: Siemens Aktiengesellschaft, 80333 München (DE)
(72) Erfinder: BUNGERT, Ulrich, 92348 Berg (DE); GOHLA, Jürgen, 91369 Wiesenthau (DE); RUPP, Dieter, 91489 Wilhelmsdorf (DE)
(74) Vertreter: Siemens Patent Attorneys
(86) Internationale Anmeldenummer: PCT/EP2021/081613
(87) Internationale Veröffentlichungsnummer: WO 2022/106326

(56) Entgegenhaltungen:
- US-A1- 2011 145 653
- US-A1- 2014 005 856

## Beschreibung

Die Erfindung betrifft ein Verfahren, bei welchem eine industrielle Maschine oder eine Automatisierungsanlage mittels eines computergestützten Sicherheitstests überprüft bzw. validiert wird.

Darüber hinaus betrifft die Erfindung ein Computerprogramm umfassend Befehle, welche beim Ausführen des Computerprogramms durch eine Engineering-Plattform, diese dazu veranlassen, das vorgenannte Verfahren durchzuführen.

Obendrein betrifft die Erfindung einen maschinenlesbaren Datenträger und einen Datenstrom mit dem vorgenannten Computerprogramm. Dabei kann das Computerprogramm beispielsweise in verschlüsselter und/oder komprimierter Form vorliegen.

Außerdem betrifft die Erfindung eine Engineering-Plattform, umfassend das vorgenannte Computerprogramm.

Die Verfahren der eingangs genannten Art - also die Sicherheitstests für industrielle Maschinen oder Automatisierungsanlagen auf dem Gebiet der Automatisierungstechnik - sind aus dem Stand der Technik bekannt. Beispielsweise zeigt US 2004/0153788 A1 ein Verfahren, bei welchem einzelne Komponenten einer industriellen Maschine überprüft werden können. Der computergestützte Sicherheitstest ist dabei als ein Wizard ausgestaltet, welcher auf einer Engineering-Plattform abläuft. Nachteilhaft bei den aus dem Stand der Technik bekannten Verfahren ist, dass im Rahmen der Maschinenvalidierung mithilfe solcher Sicherheitstests nur bestimmte einzelne Komponenten, beispielsweise Antriebe, der Maschine validiert werden können.

US 2014/0005856 A1 und US 2011/0145653 A1 offenbaren ein automatisches Generieren von Testfällen aus einem zu testenden Steuerprogramm.

Die Aufgabe der vorliegenden Erfindung kann somit darin gesehen werden, Verfahren und Systeme, insbesondere in Form von Engineering-Plattformen bereitzustellen, die den vorgenannten Nachteil überwinden.

Die Aufgabe der Erfindung wird mit einem Verfahren nach Anspruch 1 gelöst.

Die Erfindung ermöglicht beispielsweise einen Funktionstest der Sicherheitsfunktionen der industriellen Maschine oder der Automatisierungsanlage.

Erfindungsgemäß ist vorgesehen, dass der computergestützte Sicherheitstest aus über die industrielle Maschine oder über die Automatisierungsanlage verfügbaren Daten den wenigstens einen Ansteuerungspfad automatisch ermittelt und aus diesen Daten eine Testspezifikation bzw. eine Beschreibung eines Testfalls für den ermittelten wenigstens einen Ansteuerungspfad generiert. Gemäß dieser Spezifikation kann der Sicherheitstest durchgeführt werden.

Darüber hinaus kann vorgesehen sein, dass mehrere Ansteuerungspfade ermittelt werden und für jeden Ansteuerungspfad eine Testspezifikation bzw. eine Beschreibung eines Testfalls generiert wird.

Die verfügbaren Daten, die für die Beschreibung des Testfalls oder der Testfälle relevant sind, werden aus Maschinensignalen und/oder -zuständen, die in den Steuerungs- und Antriebssystemen verfügbar sind, ausgelesen und vorzugsweise visualisiert.

Bei einer Ausführungsform kann mit Vorteil vorgesehen sein, dass der computergestützte Sicherheitstest die Überprüfung des wenigstens einen Ansteuerungspfades automatisch durchführt.

Erfindungsgemäß ist vorgesehen, dass der wenigstens eine Ansteuerungspfad mit einer Sensoreinrichtung beginnt und mit einer Reaktionskomponente endet und bei dem Überprüfen des wenigstens einen Ansteuerungspfades einzelne physikalische Schnittstellen geprüft werden. Dies hat zum Vorteil, dass bei dem Sicherheitstest Schnittstellen der Automatisierungs- und Antriebskomponenten in der Maschine / Anlage mit in die Validierung einbezogen und validiert werden können.

Erfindungsgemäß ist vorgesehen, dass die Sensoreinrichtung einen Not-Aus-Schalter und/oder einen Not-Halt-Schalter und/oder einen Sicherheitspositionsschalter aufweist. Es kann vorgesehen sein, dass die Sensoreinrichtung einen oder mehrere technische Fühler bzw. Messfühler und/oder einen Sensorschalter, beispielsweise einen auf Berührungen regierende Schalter aufweist.

Bei einer Ausführungsform kann zweckdienlich sein, wenn bei dem computergestützten Sicherheitstest
- für die Überprüfung des wenigstens einen Ansteuerungspfades ein entsprechender Initialzustand der industriellen Maschine oder der Automatisierungsanlage definiert und ein entsprechender Testablauf festgelegt wird,
- die industrielle Maschine oder die Automatisierungsanlage in den Initialzustand versetzt bzw. überführt wird und währenddessen überwacht wird,
- beginnend von dem Initialzustand der Testablauf durchgeführt wird, wobei die industrielle Maschine oder die Automatisierungsanlage bei dem Testablauf überwacht wird.

Der Testablauf kann einen oder mehrere Testschritte umfassen, in welchen Handlungsanweisungen und zu erwartende Reaktionen der industriellen Maschine oder der Automatisierungsanlage beschrieben sind.

Das vorhin beschriebene Verfahren gestattet die Übertragung der Testfall-Beschreibungen (Initialzustand, Testablauf) auf andere industrielle Maschinen / Automatisierungsanlagen zur Wiederverwendbarkeit.

Bei einer Ausführungsform kann vorgesehen sein, dass bei dem Überwachen geprüft wird, ob eine oder mehrere Reaktionen der industriellen Maschine oder der Automatisierungsanlage auf Handlungsschritt(e) mit einer/mehreren zu erwartenden Reaktion/en übereinstimmen.

Unter dem Begriff "zu erwartende Reaktion auf einen Handlungsschritt" wird im Zusammenhang mit der vorliegenden Erfindung ein durch das Vornehmen des Handlungsschritts hervorgerufenes Verhalten der industriellen Maschine oder der Automatisierungsanlage verstanden, das die industrielle Maschine oder die Automatisierungsanlage zeigen muss, damit ein dem Handlungsschritt entsprechender Teiltest als erfolgreich abgeschlossen gelten kann.

In anderen Worten können zur Durchführung eines Tests mehrere Teiltests notwendig sein, wobei jeder Teiltest durch einen Handlungsschritt vorgenommen wird. Jeder der Handlungsschritte führt zu einem Teil-Ergebnis, welches als Ergebnis des Teiltests angesehen werden kann.

Dabei kann es mit Vorteil vorgesehen sein, dass während des gesamten Testablaufs für den Testablauf relevante Daten, Zustände der industriellen Maschine oder der Automatisierungsanlage, durchgeführte Handlungsschritte und Reaktionen der industriellen Maschine oder der Automatisierungsanlage auf die durchgeführten Handlungsschritte überwacht und vorzugsweise dokumentiert werden.

Es kann besonders nützlich sein, wenn vorgeschriebene Handlungsschritte, die tatsächlich nicht vorgenommen wurden, und/oder nicht erreichte Zustände der Fertigungsanlage in dem Computerprogramm ausgewiesen und dokumentiert werden.

Erfindungsgemäß ist vorgesehen, dass der computergestützte Sicherheitstest ferner einen Abnahmetest, bei welchem zumindest eine Sicherheitsfunktion und/oder eine Sicherheits-Teilfunktion überprüft wird, umfasst.

Bei einer Ausführungsform kann es vorteilhaft sein, wenn die industrielle Maschine oder die Automatisierungsanlage in Form einer Simulation, eines digitalen Abbildes einer realen industriellen Maschine oder der Automatisierungsanlage, insbesondere in Form eines digitalen Zwillings vorliegt.

Bei einer Ausführungsform kann vorgesehen sein, dass der computergestützte Sicherheitstest durch einen Bediener oder automatisch durchgeführt wird.

Die oben genannte Aufgabe wird auch mit einem Computerprogramm erfindungsgemäß dadurch gelöst, dass das Programm Befehle umfasst, welche beim Ausführen des Computerprogramms durch einen an der industriellen Maschine oder an der Automatisierungsanlage angeschlossenen Computer, diesen dazu befähigen oder veranlassen, das vorgenannte Verfahren durchzuführen. Das Computerprogramm kann beispielsweise auf einem Laptop oder Tablet gespeichert sein.

Das Verfahren kann auf den unterschiedlichen Plattformen (Engineering-Plattformen, HMI) implementiert werden. Zusammenfassend bietet das vorhin beschriebene Verfahren eine generische Beschreibung von Testfällen. Ein Testfall kann Eingangsbedingungen, Handlungsanweisungen und Reaktionen umfassen. Die Durchführung dieser (unterschiedlichen) Testfälle (mit unterschiedlichen Testabläufen) kann an der Maschine oder an der Automatisierungsanlage manuell durch einen Anwender oder durch einen software-basierten automatischen Ablauf erfolgen.

Die für die Beschreibung der Testfälle relevanten Daten werden aus Maschinensignalen und/oder -zuständen, die in den Steuerungs- und Antriebssystemen verfügbar sind, ausgelesen und können beispielsweise visualisiert werden. Die Reaktion der industriellen Maschine oder der Automatisierungsanlage definiert das konkrete und detaillierte Verhalten, das die industrielle Maschine oder die Automatisierungsanlage beim Testablauf einnehmen muss, damit der Test erfolgreich abgeschlossen werden kann.

Die Durchführung der Sicherheitstests mit einem Computerprogramm bietet dem Anwender eine einfache Durchführung der Testfälle auf der Basis von Assistenten. Die Assistenten können beispielsweise automatisch aus der Testfall-Beschreibung generiert werden und im Rahmen der Testdurchführung auf die Daten und Zustände der industriellen Maschine oder der Automatisierungsanlage (verfügbar in den Steuerungs- und Antriebssystemen) zugreifen. Neben dieser manuellen Durchführung gestattet das Verfahren, wie bereits beschrieben, auch die Automatisierung der Testfälle, die damit selbstständig beispielsweise auf einer Steuerung ablaufen können.

Das Verfahren ermöglicht einerseits eine höhere Transparenz bei der Validierung der industriellen Maschinen oder der Automatisierungsanlagen, insbesondere bei der Validierung ihrer Verdrahtung. Andererseits kann das Verfahren die Zeit und den Aufwand, die ein Maschinenbauer für Prozesserstellung für die Tests sowie für eine manuelle Beschreibung, Durchführung und Dokumentation der Testschritte aufwendet, deutlich reduzieren.

Im Folgenden wird die Erfindung anhand der in den Figuren dargestellten Ausführungsbeispiele näher beschrieben und erläutert. Es zeigen:
- FIG 1: ein System zum Überprüfen der Sicherheit einer Fertigungsanlage, und
- FIG 2: ein Flussdiagramm eines Ausführungsbeispiels eines Validierungsverfahrens einer Fertigungsanlage.

In den Ausführungsbeispielen und Figuren können gleiche oder gleich wirkende Elemente jeweils mit den gleichen Bezugszeichen versehen sein.

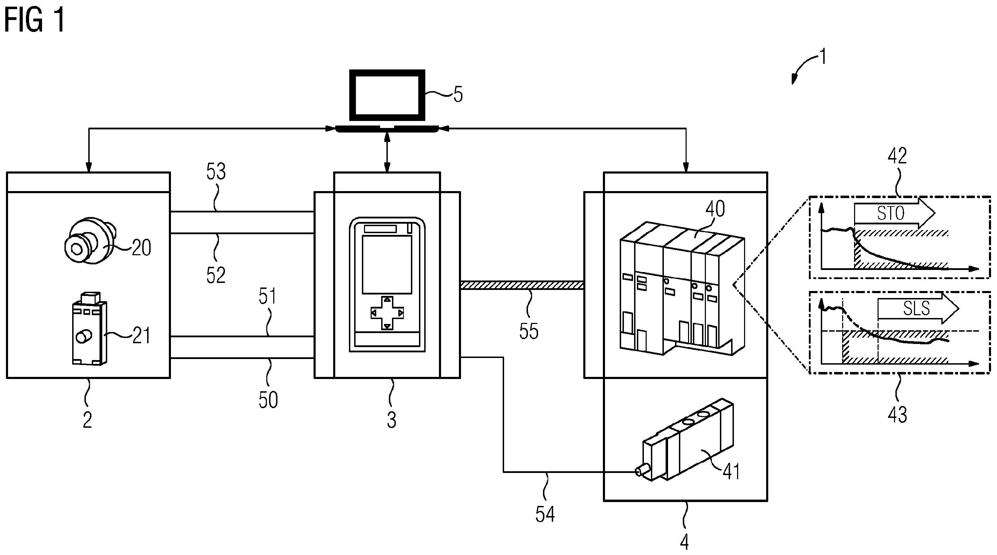

Zunächst wird auf FIG 1 Bezug genommen. Diese zeigt ein System 1 zum Überprüfen der Sicherheit einer Fertigungsanlage. Systeme zum Überprüfen der Sicherheit von industriellen Maschinen, beispielsweise Werkzeugmaschinen, oder Automatisierungsanlagen, beispielsweise Fertigungsanlagen, weisen eine Funktionalität auf, die typischerweise drei Funktionen umfasst: Erfassen, Auswerten und Reagieren. Jede Funktion kann beispielsweise mittels einer Hardware- oder Softwarekomponente durchführbar sein, wobei die Hardware- und/oder Softwarekomponenten miteinander zusammenwirken, um die Funktionalität des Sicherheitssystems zu ermöglichen. Die drei Komponenten können baulich getrennt voneinander ausgebildet sein und/oder Benutzerschnittstellen aufweisen.

Das System 1 kann als eine Engineering-Plattform oder als ein Teil einer Engineering-Plattform ausgebildet sein. Ein Beispiel einer Engineering-Plattform ist TIA (engl.: Totally Integrated Automation) Portal.

Das Zusammenwirken der einzelnen Komponenten wird durch Verbinden der Komponenten zum einseitigen oder zweiseitigen Information- und/oder Signalaustausch ermöglicht. Die Komponenten können beispielsweise kabelgebunden sein. Die Verbindung der Komponenten kann auch über Funk erfolgen.

Das in FIG 1 gezeigte System 1 umfasst eine Sensoreinrichtung 2 (Erfassen), eine Steuereinheit 3 (Auswerten) und eine Reaktionskomponente 4 (Reagieren).

Die Sensoreinrichtung 2 weist einen Not-Aus-Schalter bzw. Not-Halt-Schalter 20 einer (hier nicht gezeigten) Werkzeugmaschine und einen Sicherheitspositionsschalter 21, der an einem (hier nicht gezeigten) Fertigungsband angeordnet sein kann. Die Sensoreinrichtung 2 kann auch einen oder mehrere Sensoren anderer Art umfassen. Die einzelnen Sensoren können als technische Fühler bzw. Messfühler oder als Sensorschalter, beispielsweise wie der vorgenannte auf Berührungen regierende Schalter 20 ausgebildet sein.

Die Sensoreinrichtung 2 ist mit der Steuereinheit 3 mittels Verbindungen 50, 51, 52, 53 verbunden. Die Datenverbindungen können beispielsweise als Kabel (in diesem Fall wird von einer Verdrahtung zwischen der Sensoreinrichtung 2 und der Steuereinheit 3 gesprochen) oder als ein Datenbussystem (z.B. ein Feldbus). Die Steuereinheit 3 wertet von der Sensoreinrichtung 2, beispielsweise von dem Notausschalter bzw. Not-Halt-Schalter 20 oder von dem Sicherheitspositionsschalter 21 empfangenen Signale aus und sendet entsprechende Signale / Befehle, beispielsweise über weitere Verbindungen an die Reaktionskomponente 4, um die Werkzeugmaschine und oder das Fertigungsband über die Reaktionskomponente 4 anzusteuern. Die weiteren Verbindungen können ebenfalls als Kabel 54 (digitale Ausgänge der Steuereinheit 3) oder als ein Feldbus 55 ausgebildet sein.

Die Steuereinheit 3 kann die Ergebnisse der Auswertung an die Reaktionskomponente, beispielsweise in Form von zyklischen Telegrammen übermitteln. Beispielsweise kann die Auswertekomponente mit einem, vorzugsweise fehlerfrei funktionierenden Auswerte-Computerprogramm zum Auswerten der von der Erfassungskomponente empfangenen Signalen ausgestattet sein und vorzugsweise eine mit einer Bedienoberfläche ausgestattete Benutzerschnittstelle aufweisen.

Die Reaktionskomponente 4 umfasst eine als Umrichter 40 ausgebildete Antriebseinheit und einen Aktor 41, der beispielsweise als ein Wegeventil ausgebildet sein kann. Der Aktor 41 kann beispielsweise dazu eingerichtet sein, eine oder mehrere Maschinenkomponenten der (hier nicht gezeigten) Werkzeugmaschine beispielsweise hydraulisch oder pneumatisch anzutreiben. Der Umrichter 40 kann beispielsweise als ein Frequenzumrichter ausgebildet sein. Der Umrichter 40 kann zum Antrieb der Teile oder der gesamten Werkzeugmaschine, des Fertigungsbandes oder eines anderen Teils bzw. einer anderen Komponente der Fertigungsanlage vorgesehen sein.

Insgesamt lässt FIG 1 mehrere Ansteuerpfade erkennen, über welche die sicherheitsrelevanten Signale von der Sensoreinrichtung 2 zu der Reaktionskomponente 4 übertragen werden können. Z.B. bilden die Verbindungen 52 und 53 einen Teil eines logischen, vorzugsweise fehlersicheren Ansteuerpfades. Die Verbindungen 50, 51 bilden ebenfalls einen Teil eines logischen, vorzugsweise fehlersicheren Ansteuerpfades. Jeder Ansteuerpfad beginnt in einem Sensor 20, 21 der Sensoreinrichtung 2 und endet in einem Umrichter 40 oder einem Aktor 41. Somit handelt es sich um Ansteuerpfade der gesamten Fertigungsanlage.

Der Umrichter 40 kann beispielsweise als eine Versorgungseinheit für einen Antrieb (hier nicht gezeigt), beispielsweise einen Vorschub- oder einen Hauptantrieb einer Werkzeugmaschine ausgebildet sein.

Der Aktor 41 kann beispielsweise als ein Pneumatik- bzw. Hydraulikaktor, Hilfsantrieb usw. ausgebildet sein.

Bevor die Fertigungsanlage in Betrieb genommen werden kann, wird das System 1 mittels eines computergestützten Sicherheitstests geprüft, wobei bei dem Sicherheitstest wenigstens einer der vorgenannten Ansteuerungspfade überprüft wird. Bei dem computergestützten Sicherheitstest handelt es sich um einen Sicherheitstest, der mithilfe eines Computerprogramms durchgeführt wird.

Bei dem Überprüfen des Ansteuerungspfades oder der Ansteuerungspfade können einzelne physikalischen und/oder datentechnischen Schnittstellen, zum Beispiel einzelne Verbindungen 50 bis 55 geprüft werden.

Durch eine solche Prüfung einzelner Datenpunkte kann der gesamte Signalpfad vom Sensor 20, 21 bis zum Umrichter 40 oder Aktor 41 aufgespannt und damit in den Test mit einbezogen werden. Somit erfolgt ein Test der gesamten Fertigungsanlage - ein Verdrahtungstest.

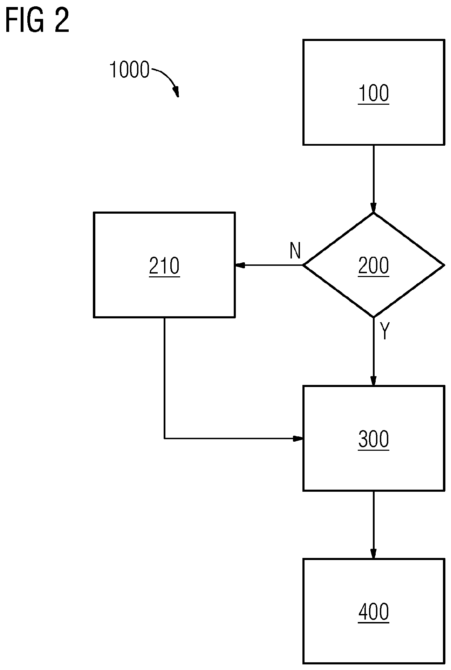

FIG 2 zeigt ein Flussdiagramm eines Ausführungsbeispiels des computergestützten Sicherheitstests 1000, bei welchem wenigstens ein Ansteuerungspfad überprüft wird. Dazu ermittelt der computergestützte Sicherheitstest 1000 aus über die industrielle Maschine oder über die Automatisierungsanlage verfügbaren Daten den Ansteuerungspfad automatisch und generiert eine Testspezifikation für den ermittelten wenigstens einen Ansteuerungspfad. Die Überprüfung des Ansteuerungspfades kann der computergestützte Sicherheitstest 1000 automatisch und vorzugsweise basierend auf den Testspezifikationen durchführen.

Zunächst - Schritt 100 - können für die Überprüfung des wenigstens einen Ansteuerungspfades ein Initialzustand der (gesamten) Fertigungsanlage und ein Testablauf festgelegt werden. In anderen Worten kann es zweckdienlich sein, einen bestimmten Ansteuerungspfad ausgehend von einem bestimmten entsprechenden Initialzustand und gemäß einem bestimmten Testablauf zu überprüfen.

Dies kann beispielsweise durch einen Bediener erfolgen, der in dem Computerprogramm einen Initialzustand definiert und einen Testablauf für die Überprüfung eines bestimmten Ansteuerungspfades festlegt.

Anschließend - Schritt 200 - wird die Fertigungsanlage in den Initialzustand versetzt. Der Initialzustand kann beispielsweise vorschreiben, dass der Aktor 41 (z.B. eine Achse) in eine definierte Position gefahren werden soll. Das Versetzen der Fertigungsanlage in den vordefinierten Zustand wird bei dem computergestützten Sicherheitstest überwacht. Dabei wird dafür gesorgt, dass diese Aktion - das Versetzen - richtig bzw. ordnungsgemäß durchgeführt wird, indem beispielsweise überprüft wird, ob die Fertigungsanlage auf beim Versetzen in den Initialzustand durchzuführende Handlungen ordnungsgemäß reagiert, d. h die Reaktion der Fertigungsanlage auf die Handlungen der zu erwartenden Reaktion entspricht. Treten bei dem Versetzen der Fertigungsanlage in den Initialzustand keine Fehler auf, wird der (weitere) Testablauf freigegeben - Pfeil Y.

Entspricht beim Versetzen der Fertigungsanlage in den Initialzustand ihre Reaktion nicht der zu erwartenden Reaktion - Pfeil N (der Aktor 41 bleibt zum Beispiel still oder wird nicht in die definierte Position gefahren), kann das Computerprogramm eine Warnmeldung ausgeben und den Bediener zu dem Beheben des aufgetretenen Fehlers bzw. der aufgetretenen Fehler auffordern - Schritt 210. Nachdem der oder die Fehler behoben wurde oder wurden und der definierte Initialzustand erreicht wurde, wird der weitere Testablauf freigegeben. Es ist auch denkbar, dass das Computerprogramm den Fehler automatisch / von sich aus behebt und dies vorzugsweise dokumentiert. Das letztere kann insbesondere dann der Fall sein, wenn die Fertigungsanlage als ein digitaler Zwilling ausgebildet ist, d.h. ein digitales Abbild einer realen Fertigungsanlage ist.

Nachdem der (definierte) Initialzustand - entweder ohne Fehler oder nachdem alle Fehler behoben sind - erreicht ist, wird der weitere Ablauf des Tests freigegeben.

Der Testablauf kann eine Beschreibung von durchzuführenden Handlungen und zu erwartenden Reaktionen der Fertigungsanlage umfassen. In anderen Worten kann ein Bediener beim computergestützten Sicherheitstest von dem Computerprogramm durch den Test geführt werden, indem er/sie Handlungsanweisungen erhält.

Dabei können während des gesamten Ablaufs für den Testablauf relevante Daten, Zustände der Fertigungsanlage, beispielsweise vom Bediener vorgenommene Handlungsschritte und Reaktionen der Fertigungsanlage auf die vorgenommenen Handlungsschritte überwacht und vorzugsweise dokumentiert werden. Es kann besonders nützlich sein, wenn vorgeschriebene Handlungsschritte, die tatsächlich nicht vorgenommen wurden, und/oder nicht erreichte Zustände der Fertigungsanlage in dem Computerprogramm ausgewiesen und dokumentiert werden.

Bei jeder durchgeführten Handlung kann beispielsweise die Reaktion der Fertigungsanlage auf diese Handlung mit einer zu erwartenden Reaktion verglichen werden.

Bei dem weiteren Testablauf kann beispielsweise überprüft werden, ob der Umrichter 40 in Reaktion auf ein vom Sensor 20, 21 ausgehendes Signal eine oder mehrere Sicherheits-Teilfunktionen 42, 43 durchführt, ohne dass diese Sicherheits-Teilfunktionen 42, 43 selbst überprüft werden müssen.

Jede Antriebseinheit umfasst zumindest eine Sicherheitsfunktion. Diese zumindest eine Sicherheitsfunktion ist in jeder Antriebseinheit integriert. Der Begriff "Sicherheitsfunktion" ist auf dem Gebiet der funktionalen Sicherheit hinlänglich bekannt. Eine Sicherheitsfunktion umfasst (alle) Sicherheits-Teilfunktionen von Sensor bis zum Aktor oder bis zum Antrieb/Umrichter.

Eine nicht abschließende Liste der Sicherheitsfunktionen ist: STO (Safe torque off); SS1 (Safe stop 1); SS2 (Safe stop 2); SOS (Safe operating stop); SLS (Safelylimited speed); SSM (Safe speed monitor); SSR (Safe speed range); SLP (Safelylimited position); SDI (Safe direction). Die vorgenannten Sicherheits-Teilfunktionen sind beispielsweise in DIN EN 61800-5-2 enthalten. Weitere Sicherheits-Teilfunktionen sind beispielsweise SP (Safe position); SBC/SBT (Safe brake control, Safe brake test).

Ferner umfasst der Sicherheitstest einen Abnahmetest, bei welchem auch die Richtigkeit der Ausführung zumindest eine der Sicherheits-Teilfunktionen 42, 43 überprüft wird - Schritt 400.

Abnahmetest ist auch als Konfigurationstest (IEC 61800-5-2) oder Safety-Abnahmetest bekannt. Bei einem Abnahmetest kann ein oder mehrere der nachfolgenden Schritte durchgeführt werden:
- Überprüfen einer oder mehreren Sicherheitsfunktionen auf korrekte Parametrisierung;
- Durchführen einer Plausibilitätskontrolle der (projektierten) Sicherheitsfunktionen durch Messung von Reaktionszeiten und/oder Beobachten der Stopp-Reaktionen bei Grenzwertverletzungen;
- Dokumentieren der parametrierten Sicherheitsfunktionen.

Das vorgenannte Computerprogramm kann beispielsweise auf einem computerlesbaren Datenträger ausführbar gespeichert sein. Der Datenträger kann beispielsweise als eine Festplatte eines Laptops 5, also eines tragbaren Computers sein. Der Laptop 5 kann beispielsweise an der vorgenannten Engineering-Plattform angebunden oder ein Teil davon sein.

Der Laptop 5 mit dem darauf installierten Computerprogramm kann zwecks Durchführung des Sicherheitstests an das System 1 einer realen Fertigungsanlage angeschlossen sein oder mit ihrem digitalen Abbild verbunden sein.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können die im Zusammenhang mit dem Verfahren beschriebenen Merkmale (FIG 2) auch bei dem System (FIG 1) zum Einsatz kommen bzw. dieses vervollständigen und *vice versa.*

## Patentansprüche

1. Verfahren, bei welchem eine industrielle Maschine, wobei die industrielle Maschine als eine Werkzeugmaschine ausgebildet ist, oder eine als eine Fertigungsanlage ausgebildete Automatisierungsanlage mittels eines computergestützten Sicherheitstests (1000) überprüft wird, wobei der computergestützte Sicherheitstest einen Abnahmetest, bei welchem zumindest eine Sicherheitsfunktion und/oder eine Sicherheits-Teilfunktion (42,43) überprüft wird, umfasst, wobei bei dem computergestützten Sicherheitstest (1000) wenigstens ein Ansteuerungspfad der gesamten Werkzeugmaschine oder der gesamten Fertigungsanlage überprüft wird, wobei der wenigstens eine Ansteuerungspfad der gesamten Werkzeugmaschine oder der gesamten Fertigungsanlage mit einer Sensoreinrichtung (2,20,21) beginnt, die einen Not-Aus-Schalter bzw. einen Not-Halt-Schalter (20) der Werkzeugmaschine und/oder einen an einem Fertigungsband angeordneten Sicherheitspositionsschalter (21) umfasst, und mit einer Reaktionskomponente (4, 40, 41) endet,
wobei bei dem Überprüfen des wenigstens einen Ansteuerungspfades einzelne physikalische Schnittstellen geprüft werden,
**dadurch gekennzeichnet, dass** 1
der computergestützte Sicherheitstest (1000) aus über die industrielle Maschine oder über die Automatisierungsanlage verfügbaren Daten den wenigstens einen Ansteuerungspfad automatisch ermittelt und aus diesen Daten eine Testspezifikation bzw. eine Beschreibung eines Testfalls für den ermittelten wenigstens einen Ansteuerungspfad generiert, und
die verfügbaren Daten aus Maschinensignalen und/oder -zuständen, die in Steuerungs- und Antriebssystemen verfügbar sind, ausgelesen werden.

2. Verfahren nach Anspruch 1, wobei der computergestützte Sicherheitstest (1000) die Überprüfung des wenigstens einen Ansteuerungspfades automatisch durchführt.

3. Verfahren nach einem der Ansprüche 1 und 2, wobei die Sensoreinrichtung (2) einen oder mehrere technische Fühler bzw. Messfühler und/oder einen Sensorschalter, beispielsweise einen auf Berührungen regierende Schalter aufweist.

4. Verfahren nach einem der Ansprüche 1 bis 3, wobei bei dem computergestützten Sicherheitstest
- für die Überprüfung des wenigstens einen Ansteuerungspfades ein entsprechender Initialzustand der industriellen Maschine oder der Automatisierungsanlage definiert und ein entsprechender Testablauf festgelegt wird,
- die industrielle Maschine oder die Automatisierungsanlage in den Initialzustand versetzt wird und währenddessen überwacht wird,
- beginnend von dem Initialzustand der Testablauf durchgeführt wird, wobei die industrielle Maschine oder die Automatisierungsanlage bei dem Testablauf überwacht wird.

5. Verfahren nach Anspruch 4, wobei während des gesamten Testablaufs für den Testablauf relevante Daten, Zustände der industriellen Maschine oder der Automatisierungsanlage, durchgeführte Handlungsschritte und Reaktionen der industriellen Maschine oder der Automatisierungsanlage auf die durchgeführten Handlungsschritte überwacht und vorzugsweise dokumentiert werden.

6. Verfahren nach einem der Ansprüche 1 bis 5, wobei die industrielle Maschine oder die Automatisierungsanlage in Form einer Simulation, eines digitalen Abbildes einer realen industriellen Maschine oder der Automatisierungsanlage, insbesondere in Form eines digitalen Zwillings vorliegt.

7. Verfahren nach einem der Ansprüche 1 bis 6, wobei der computergestützte Sicherheitstest durch einen Bediener oder automatisch durchgeführt wird.

8. Computerprogramm umfassend Befehle, welche beim Ausführen des Computerprogramms durch eine Engineering-Plattform, diese dazu veranlassen, ein Verfahren nach einem der Ansprüche 1 bis 7 durchzuführen.

9. Maschinenlesbarer Datenträger umfassend ein Computerprogramm nach Anspruch 8.

10. Datenstrom, welcher das Computerprogramm nach Anspruch 8 trägt.

11. Engineering-Plattform, umfassend ein Computerprogramm nach Anspruch 8.

## Claims

1. Method, in which an industrial machine, wherein the industrial machine is embodied as a machine tool, or an automation installation embodied as a manufacturing installation is checked by means of a computer-assisted safety test (1000), wherein the computer-assisted safety test comprises an acceptance test, with which at least one safety function and/or one safety subfunction (42, 43) is checked, wherein with the computer-assisted safety test (1000) at least one control path of the entire machine tool or the entire manufacturing installation is checked, wherein the at least one control path of the entire machine tool or the entire manufacturing installation begins with a sensor facility (2, 20, 21), which comprises an emergency off button or an emergency stop button (20) of the machine tool and/or a safety position switch (21) arranged on a production line, and ends with a reaction component (4, 40, 41), wherein individual physical interfaces are tested when the at least one control path is checked,
**characterised in that**
the computer-assisted safety test (1000) determines, automatically, the at least one control path from available data relating to the industrial machine or the automation installation, and from this data generates a test specification or a description of a test case for the determined at least one control path and the available data is read out from machine signals and/or states which are available in control and drive systems.

2. Method according to claim 1, wherein the computer-assisted safety test (1000) carries out the check of the at least one control path automatically.

3. Method according to one of claims 1 and 2, wherein the sensor facility (2) has one or more technical sensors or measuring sensors and/or a sensor switch, for instance a switch which responds to touch.

4. Method according to one of claims 1 to 3, wherein with the computer-assisted safety test
- a corresponding initial state of the industrial machine or the automation installation is defined for the checking of the at least one control path and a corresponding test run is fixed,
- the industrial machine or the automation installation is moved into the initial state and during this is monitored,
- starting from the initial state, the test run is carried out, wherein the industrial machine or the automation installation is monitored during the test run.

5. Method according to claim 4, wherein during the entire test run, data relevant to the test run, states of the industrial machine or the automation installation, implemented action steps and reactions of the industrial machine or the automation installation to the implemented action steps are monitored and are preferably documented.

6. Method according to one of claims 1 to 5, wherein the industrial machine or the automation installation is present in the form of a simulation, a digital image of a real industrial machine or the automation installation, in particular in the form of a digital twin.

7. Method according to one of claims 1 to 6, wherein the computer-assisted safety test is carried out by an operator or automatically.

8. Computer program comprising commands which, on execution of the computer program by an engineering platform, cause this to carry out a method according to one of claims 1 to 7.

9. Machine-readable data medium comprising a computer program according to claim 8.

10. Data stream which carries the computer program according to claim 8.

11. Engineering platform, comprising a computer program according to claim 8.

## Revendications

1. Procédé, dans lequel on contrôle, au moyen d'un test (1000) de sécurité assisté par ordinateur, une machine industrielle, la machine industrielle étant constituée sous la forme d'une machine-outil ou une installation d'automatisation constituée sous la forme d'une installation de fabrication, dans lequel le test de sécurité assisté par ordinateur comprend un test de retrait, dans lequel on contrôle au moins une fonction de sécurité et/ou une fonction (42, 43) partielle de sécurité, dans lequel, dans le test (1000) de sécurité assisté par ordinateur, on contrôle au moins un chemin de commande de toute la machine-outil ou de toute l'installation de fabrication, dans lequel le au moins un chemin de commande de toute la machine-outil ou de toute l'installation de fabrication commence par un dispositif (2, 20, 21) de capteur, qui comprend un interrupteur d'arrêt en cas d'urgence ou respectivement un interrupteur (20) d'interruption en cas d'urgence de la machine-outil et/ou un interrupteur (21) de position de sécurité monté sur une bande de fabrication, et se termine par un composant (4, 40, 41) de réaction,
dans lequel,
lors du contrôle du au moins un chemin de commande, on contrôle diverses interfaces physiques,
**caractérisé en ce que**
le test (1000) de sécurité assisté par ordinateur détermine automatiquement le au moins un chemin de commande, à partir de données disponibles sur la machine industrielle ou sur l'installation d'automatisation et, à partir de ces données, crée une spécification de test ou respectivement une description d'un cas de test pour le moins un chemin de commande déterminé, et
on lit les données disponibles à partir de signaux de machine et/ou d'état de machine, qui sont disponibles dans des systèmes de commande et d'entraînements.

2. Procédé suivant la revendication 1, dans lequel le test (1000) de sécurité assisté par ordinateur effectue automatiquement le contrôle du au moins un chemin de commande.

3. Procédé suivant l'une des revendications 1 et 2, dans lequel le dispositif (2) capteur a une ou plusieurs sondes techniques ou sondes de mesure et/ou un interrupteur de capteur, par exemple un interrupteur réagissant à des touchés.

4. Procédé suivant l'une des revendications 1 à 3, dans lequel, dans le test de sécurité assisté par ordinateur,
- on définit, pour le contrôle du au moins un chemin de commande, un état initial approprié de la machine industrielle ou de l'installation d'automatisation et un déroulement approprié du test,
- on met la machine industrielle ou l'installation d'automatisation dans l'état initial et on la contrôle pendant celui-ci,
- en commençant par l'état initial, on effectue le déroulement du test, dans lequel on contrôle la machine industrielle ou l'installation d'automatisation lors du déroulement du test.

5. Procédé suivant la revendication 4, dans lequel, pendant tout le déroulement du test, on contrôle des données pertinentes pour le déroulement du test, des états de la machine industrielle ou de l'installation d'automatisation, des stades de manœuvre effectués, des réactions de la machine industrielle ou de l'installation d'automatisation aux stades de manœuvre effectués et, de préférence, on en dresse procès-verbal.

6. Procédé suivant l'une des revendications 1 à 5, dans lequel la machine industrielle ou l'installation d'automatisation se présente sous la forme d'une simulation, d'une reproduction numérique d'une machine industrielle ou de l'installation d'automatisation réelle, en particulier sous la forme d'un double numérique.

7. Procédé suivant l'une des revendications 1 à 6, dans lequel on effectue le test de sécurité assisté par ordinateur par un opérateur ou automatiquement.

8. Programme d'ordinateur comprenant des instructions qui, lors de l'exécution du programme d'ordinateur par une plateforme d'ingénierie, font que celle-ci exécute un procédé suivant l'une des revendications 1 à 7.

9. Support de données exécutable par machine comprenant un programme d'ordinateur suivant la revendication 8.

10. Flux de données, qui porte le programme d'ordinateur de la revendication 8.

11. Plateforme d'ingénierie, comprenant un programme d'ordinateur suivant la revendication 8.
